# EUROPEAN PATENT SPECIFICATION

(11) **EP 0 420 602 B1**
(45) Date of publication and mention of the grant of the patent: **18.05.1994**
(21) Application number: 90310518.7
(22) Date of filing: 26.09.1990
(51) Int. Cl.: B23B 51/04

(54) **Annular hole cutter**
Rohrförmiger Bohrer
Foret tubulaire

(30) Priority: 27.09.1989 GB 8921828
(43) Date of publication of application: 03.04.1991
(73) Proprietor: ROTABROACH LIMITED, Sheffield S4 7UD (GB)
(72) Inventor: Merrill, Derrick, Dronfield, Sheffield, S18 6GW (GB); Stych, Ralph, Dronfield, Sheffield, S18 6FB (GB)
(74) Representative: Jones, Colin

(56) References cited:
- BE-A- 358 625
- GB-A- 2 182 588
- PATENT ABSTRACTS OF JAPAN, vol. 11, no. 225 (M-609)[2672], 22nd July 1987;& JP-A-62 39 113 (SABURO SUESE) 20-02-1987

## Description

This invention relates to a method of construction of an annular hole cutter according to the preamble of claim 1.

Annular hole cutters are known having a hollow cylindrical cutter body with a plurality of cutting teeth arranged around a lower end thereof, and an upper end thereof adapted for mounting on a rotary driving member (see JP-A-57-211408). The cutting teeth can be of tungsten carbide or hard metal tips brazed to the lower end of a steel body. The body is usually made of heat treated high tensile steel, in order to resist the torsional forces exerted by the cutting action.

One major drawback of the above construction is that it is extremely difficult to grind the radially inwardly facing flanks of the hard tips since the inner flanks must be inclined both to the tangent at the radius from the inner end of the cutting edge and to the axis of the cutter to provide the necessary clearance angles. Also, it is important that the inner end point of the cutting edge on each tip describes the same annular surface when rotated, otherwise non-uniform loading of the tips ensues. To grind a tip in-situ to this accuracy is extremely difficult. The abrasive wheels have, of necessity, to be of a small diameter and are subject to rapid wear and require frequent dressing.

A further disadvantage of the known construction is the accurate placement of the tips in the cutter body; locating the tips requires complicated placing and clamping means in order to minimise subsequent grinding operations.

JP-A-57-211408 discloses two projections on each of the tips of an annular hole cutter and these are said to engage the outer periphery of the cutter body to locate the tips accurately in a radial direction. However, clamps are needed to hold the tips in place and the inner flanks still require grinding.

It is an aim of the present invention to produce an annular hole cutter in which the accuracy of the positioning of the various cutting edges, clearance angles and rake angles is vastly improved and for which the manufacturing steps are simplified.

It is another object of the invention to manufacture an annular hole cutter in which the bits are positively prevented from radially inward and outward displacement without the use of clamps during brazing.

It is a further object of the invention to form the tips with the desired circumferential and axial clearances to their inner flanks and to locate the tips accurately during brazing so that the inner flanks require no grinding.

According to the present invention, a method of manufacturing an annular hole cutter in which tips are disposed in slots in a cylindrical wall of a cutter body and are secured therein by brazing, and the tips are thereafter ground to form the cutting edges, the tips being prevented by a projection thereon from radially inward displacement in the slots during brazing, is characterised in that each tip has radially outer and inner lands which respectively engage the outer and inner surfaces of the cylindrical wall to locate the tips accurately in the slots in a radial direction during the brazing and the cylindrical wall is heated circumferentially uniformly to secure all the tips simultaneously, and in that the tips are formed to have a face which is so oriented with respect to the lands that it forms the radially inner clearance face having axial and circumferential clearance without being ground subsequent to the brazing.

The method of construction of the annular hole cutter embodiying the invention is described further hereinafter, by way of example only with reference to the accompanying drawings, in which:-
Fig. 1 is a perspective view of the blank for a cutter body in which the tip-receiving slots have been cut but before insertion of the tips;
Fig. 2 is a fragmentary side elevation to show the relationship tip between a tip-receiving slot and the associated flute;
Fig. 3 is an end view of the detail of Fig. 2;
Fig. 4 is a perspective front view, to a larger scale, of one of the tips for insertion in the slots illustrated in Figs. 1 to 3;
Fig. 5 is a perspective rear view of the tip of Fig. 4;
Fig. 6 is a perspective view of the cutter body with some of the tips installed;
Fig. 7 is a fragmentary end view of the cutter body with a tip installed;
Fig. 8 is a perspective detail of part of the cutter after brazing and grinding;
Fig. 9 is a fragmentary side elevation of detail of Fig. 8;
Fig. 10 is a fragmentary end view of the cutter with a tip brazed and ground; and
Fig. 11 is a section on the line XI-XI of Fig. 7.

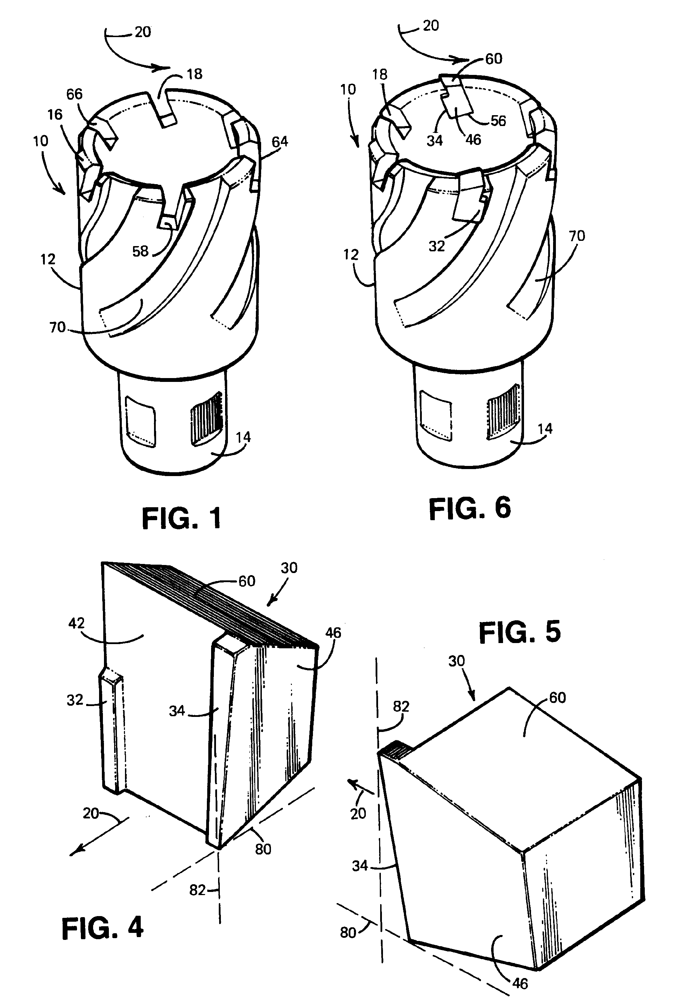

The drawings illustrate the manufacture of a tipped, fluted annular hole cutter. A steel blank 10 (Fig. 1) for the annular cutter body is machined and ground to provide a cylindrical wall 12 and a drive shank 14. Two flats at right angles to one another can be machined into the shank 14 for abutment by the ends of clamping screws in the free end of a rotary machine spindle (not shown) in which the drive shank 14 is adapted to be fitted. The machined blank can then be heat-treated.

Spiral flutes 70 are then ground in the outer peripheral surface 52 of the cylindrical wall 12. Slots 18 are machined into the annular end face 16 of the cylindrical wall 12. As shown particularly in Figs. 2 and 3, there is one slot 18 behind the free end of each flute 70, as seen in the intended direction 20 of rotation. The slots 18 are skewed in the same direction as the spiral flutes 70 but at a lesser angle to the axis 61 of rotation than the flutes. The slots 18 are circumferentially spaced from the respective flutes 70 sufficiently to leave a thin triangular portion 53 of the outer surface 52 of the cutter body 12. This triangular surface portion 53 is adjacent the leading side face 64 of the respective slot 18. Preferably, the leading bottom corner of the slot 18 virtually breaks into the adjoining flute 70. The cutter may, for example, have six tips, in which case six flutes 70 and six slots 18 are ground and machined into the cutter wall 12 and are equally circumferentially spaced.

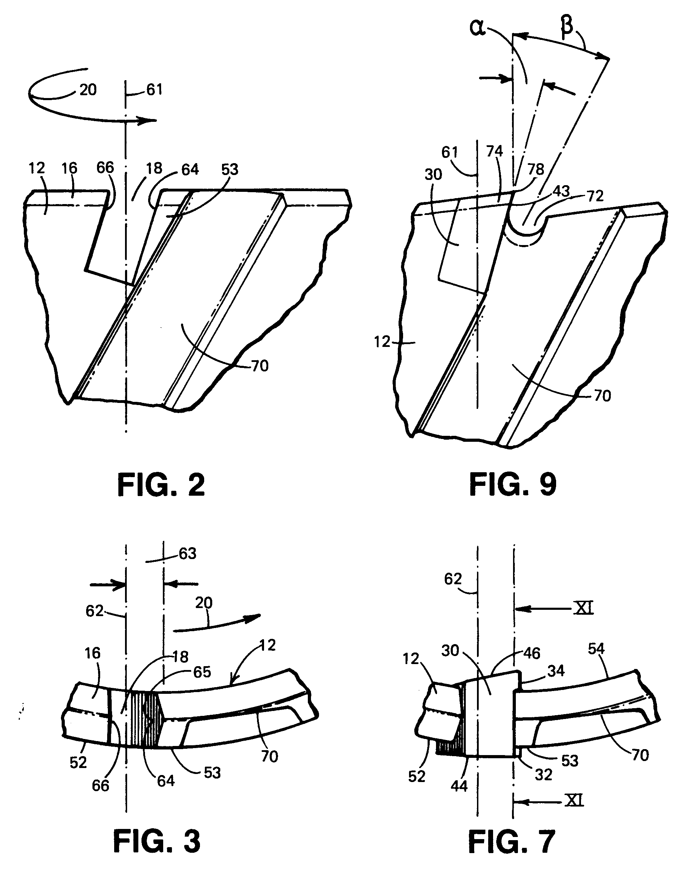

Figs. 4 and 5 illustrate one of the sintered carbide tips 30 designed to fit in the slots 18. Each tip 30 has two lands 32 and 34 on one face 42 thereof. This face 42 will be the leading face in the intended direction 20 of rotation. The lands 32, 34 serve as runners to guide the tip 30 into the respective slot 18 as shown in Figs. 6 and 7.

The first or outer land 32 comprises an elongate rectangular rib or flange which extends along the edge of the leading face 42 adjacent the flank 44 which becomes the radially outer flank in the assembled state. The second land 34 comprises an elongate tapered rib or flange which extends along the edge of the leading face 42 adjacent the radially inner flank 46. The outer land 32 co-operates with the outer surface portion 53 of the cylindrical wall 12 whereas the inner land 34 co-operates with the inner surface 54 of the cylindrical wall 12. The tips 30 stand slightly proud of the slots 18 when assembled, as can be seen from Fig. 6, when the bottom faces 56 of the tips are seated against the bottoms 58 of the slots 18.

The end face 16 of the cylindrical wall 12 is bevelled both radially upwardly and radially outwardly, as can be seen in Figs. 1 and 6. Figs. 3 and 7 show a radius 62 drawn parallel to the leading and trailing faces 64, 66 of the slot 18. As also shown in Fig 3, the leading top edge 65 of the slot 18 is in advance of the radius 62 by a predetermined distance 63. This, together with the rectangular shape of the leading outer land 32 ensures that the tips 30 are correctly oriented and located before the brazing step hereinafter described. The inner land 34 fits snugly against the inner cylindrical surface 54. It is tapered because the inner flank 46 is inclined to the cutter axis 61 as will be described later.

Thus, the tips 30 can be placed in position in the slots 18 by hand and can be retained in these slots, with the cutter body oriented with its end face 16 uppermost, by a simple hand operation without the need for any clamping and positioning devices. The tips 30 are them simultaneously brazed in place by placing spelter in the region of each tip location and by heating the cutter body 10 uniformly about its circumference. It is sufficient to heat the upper end portion of the cylindrical wall 12, e.g. by induction heating. This is much quicker than brazing each tip individually and the circumferential uniformity of heating ensures a minimum of warping of the cutter body.

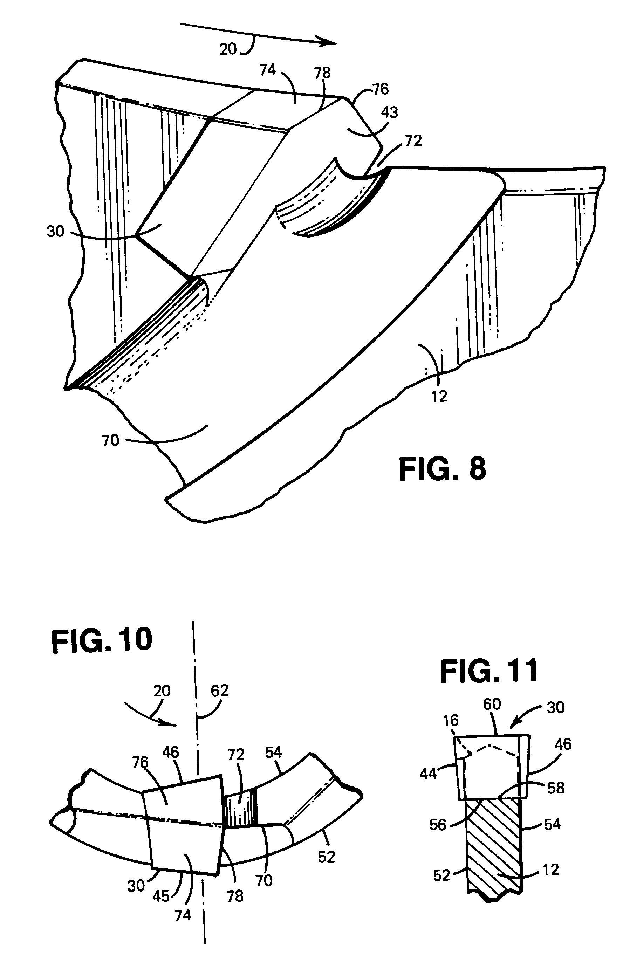

After brazing, the annular hole cutter is finished by grinding gullets 72 in the end face 16 adjacent the tips 30 so as to communicate with the flutes 70, as shown in Figs. 8, 9 and 10. Then the tips 30 are ground. This includes grinding material off the outer faces 44 to provide the appropriate radially outer side clearance face 45. The top faces 60 of the tips are ground to form outer and inner end clearance faces 74 and 76 which slope radially outwardly and inwardly, respectively. This also involves grinding the end face 16 of the annular wall 12 to provide the necessary end clearances of the cutter as a whole, the top face 60 of the tip 30 slopes relative to its bottom face, as shown in Figs. 4 and 5, whereby this top face 60 lies substantially in a radial plane, as can be seen from Figs. 6 and 11. This minimizes the amount of material to be ground of the top face 60.

A cutting edge 78 is formed by grinding the forward face 42 of each tip 30 at an angle alpha to the cutter axis 61, as shown in Fig. 9, to form a front rake face 43. The angle alpha is less than the angle beta by which the spiral flute 70 is inclined to the cutter axis 61. The optimum front rake angle alpha for hard tipped annular hole cutters has been found to be less than the flute angle beta for optimum chip clearance. Preferably alpha is about 15° and beta is about 27.5°. The angle of inclination of the slots 18 to the rotary axis 61 is made substantially equal to alpha. This minimizes the amount of material to be ground off the leading faces 42 of the tips 30.

A cutting edge 78 is formed where the end clearance faces 74, 76 meet the front rake face 43. The axial and radial angles to which the front rake face 43 is ground are such that the radially inner part of the cutting edge 78 is substantially parallel to but in advance of the radius 62, as shown in Fig. 10, whereas the radially outer part is inclined to the radius 62.

In an embodiment of the invention, it is unnecessary to grind the radially inner flanks 46 of the tips 30. As can be seen from Figs. 4 and 5, the radially inner flank 46 is inclined, both with respect to a tangent line 80 to the inner periphery of the cutter body at the cutting edge 78 and with respect to the vertical line 82. Circumferential and axial clearances are thereby imparted to the inner flank 46. Because the tip 30 is fitted in a skewed orientation in the cutter body, the tangent line 80 is slightly inclined to the horizontal (with the cutter located upright) and is therefore not a true tangent and the vertical line 82 is not quite parallel to the cutter axis 61. However the desired circumferential and axial clearances at the inner periphery of the annular hole cutter are obtained without grinding the inner faces 46 of the tips 30, as can be seen from Figs. 7 and 11, respectively. The accurate radial location of the tips 30 by virtue of the outer and inner lands 32, 34 is also essential for avoidance of grinding the inner flanks 46, as otherwise the inner end points of the cutting edges 78 would describe circles of differing diameters, leading to non-uniform tip loading.

The uniformity of heating for carrying out brazing and the possibility of its localisation to the free end portion of the cylindrical wall make it possible to carry out the heat treatment and the grinding of the flutes prior to brazing, the brazing temperature being insufficient to adversely affect the hardening effected by the heat treatment. Also, the formation of the flutes before the brazing step minimizes the amount of grinding to be performed after brazing. A grinding wheel used to grind the metal of the cutter tends to become clogged to the extent that it will not grind the tips satisfactorily. The grinding wheel used to grind the front rake face scarcely if at all engages the material of the cutter body, particularly since the tips are at a lesser angle of skew than the flute spiral angle. Only the grinding wheel used to grind the end clearance faces grinds the metal of the body and material of the tip and the amount of body metal ground off is minimized by the appropriate shaping of the end face of the annular wall to conform approximately to the radially inward and outward slopes of the end clearance faces.

It is possible to design the lands 32, 34 on a given tip 30 to suit a range of cutter diameters, thereby reducing the number of different tips needed to cover a full range of diameters. The tips 30 are normally made by a sintering process, be they tungsten carbide, hard metal on even ceramic.

The cutters embodiying the invention are intended for cutting relatively large diameter holes in hard metals, where ordinary twist drills would consume too much power, but may also be used for concrete and masonry.

## Claims

1. A method of manufacturing an annular hole cutter in which tips (30) are disposed in slots (18) in a cylindrical wall (12) of a cutter body and are secured therein by brazing, and the tips (30) are thereafter ground to form the cutting edges (78), the tips (30) being prevented by a projection (32) thereon from radially inward displacement in the slots (18) during brazing,
characterised in that each tip (30) has radially outer and inner lands (32, 34) which respectively engage the outer and inner surfaces (53, 54) of the cylindrical wall (12) to locate the tips (30) accurately in the slots (18) in a radial direction during the brazing and the cylindrical wall (12) is heated circumferentially uniformly to secure all the tips (30) simultaneously, and in that the tips (30) are formed to have a face (46) which is so oriented with respect to the lands (32, 34) that it forms the raidally inner clearance face having axial and circumferential clearance without being ground subsequent to the brazing.

2. A method as claimed in Claim 1, in which the outer land (32) is on the leading face (42) of the tip (30).

3. A method as claimed in Claim 2, in which the outer land (32) is rectangular in shape.

4. A method as claimed in any of Claims 1 to 3, in which the inner land (34) is on the leading face (42) of the tip (30).

5. A method as claimed in Claim 4, in which the inner land (34) is tapered in shape.

6. A method as claimed in any preceding Claim in which spiral flutes (70) are formed in the outer surface (52) of the cylindrical wall (12) before the tips (30) are secured by brazing or the like.

7. A method as claimed in Claim 6, in which the slots (18) are set back circumferentially from their respective flutes (70) to leave therebetween portions (53) of the outer surface (52) of the cylindrical wall (12), which portions (53) are engaged by the outer lands (32) on the tips (30) during the brazing or the like.

8. A method as claimed in any preceding Claim, in which spiral flutes (70) are formed in the outer surface (52) of the cylindrical wall (12) and the tip-receiving slots (18) are skew with respect to the rotary axis (61) and in which the angle (alpha) of skew of the slots (18) is less than the angle (beta) of spiral of the flutes (70).

9. A method as claimed in Claim 8, in which the angle (alpha) of skew of the slots (18) is less than the angle (beta) of spiral of the flutes (70) by 12.5°.

10. A method as claimed in Claim 8 or 9, in which the angle (beta) of spiral of the flutes (70) is 27.5°.

11. A method as claimed in Claim 8, 9 or 10, in which the front rake faces (43) of the tips (30) are ground after securing the tips (30) to the annular wall (12) and the grinding wheel used for this purpose grinds relatively little or none of the material of the cutter body.

12. A method as claimed in any of Claims 6 to 11, in which gullets (72) are formed in the end face (16) of the cylindrical wall (12) after the tips (30) are secured by brazing or the like.

## Patentansprüche

1. Verfahren zur Herstellung eines Rundloch-Cutters, bei dem Spitzen (30) in Schlitzen (18) in einer zylindrischen Wandung (12) eines Cutter-Körpers angeordnet und durch Hartlöten darin befestigt sind, und wobei die Spitzen (30) danach zur Bildung der Schneidkanten (78) geschliffen werden, wobei die Spitzen (30) durch einen daran befindlichen Vorsprung (32) an einer radial nach innen gerichteten Verschiebung in den Schlitzen (18) während des Hartlötens gehindert werden, dadurch gekennzeichnet, daß jede Spitze (30) radial äußere und innere Fasen (32, 34) aufweist, die jeweils in die Außen- und Innenflächen (53, 54) der zylindrischen Wandung (12) eingreifen, um die Spitzen (30) während des Hartlötens akkurat in den Schlitzen (18) in einer radialen Richtung auszurichten, und die zylindrische Wandung (12) rundum gleichmäßig erhitzt wird, um alle Spitzen (30) gleichzeitig zu befestigen, und dadurch, daß die Spitzen (30) mit einer Stirnfläche (46) ausgebildet sind, die im Hinblick auf die Fasen (32, 34) so ausgerichtet ist, daß sie die radial innere Freifläche mit axialem und umfangsmäßigem Spiel bildet, ohne nach dem Hartlöten geschliffen zu werden.

2. Verfahren nach Anspruch 1, bei dem sich die äußere Fase (32) auf der Frontfläche (42) der Spitze (30) befindet.

3. Verfahren nach Anspruch 2, bei dem die äußere Fase (32) eine rechteckige Form aufweist.

4. Verfahren nach einem der Ansprüche 1 bis 3, bei dem sich die innere Fase (34) auf der Frontfläche (42) der Spitze (30) befindet.

5. Verfahren nach Anspruch 4, wobei die innere Fase (34) eine Kegelform aufweist.

6. Verfahren nach einem der vorhergehenden Ansprüche, bei dem spiralförmige Rillen (70) in der Außenfläche (52) der zylindrischen Wandung (12) ausgebildet werden, bevor die Spitzen (30) durch Hartlöten oder auf ähnliche Weise befestigt werden.

7. Verfahren nach Anspruch 6, wobei die Schlitze (18) umfangsmäßig von ihren jeweiligen Rillen (70) zurückgesetzt sind und Abschnitte (53) der Außenflächen (52) der zylindrischen Wandung (12) dazwischen lassen, wobei während des Hartlötens oder einem ähnlichen Prozeß die äußeren Fasen (32) auf den Spitzen (30) in die Abschnitte (53) eingreifen.

8. Verfahren nach einem der vorhergehenden Ansprüche, bei dem spiralförmige Rillen (70) in der Außenfläche (52) der zylindrischen Wand (12) ausgebildet sind und die die Spitzen aufnehmenden Schlitze (18) im Hinblick auf die Drehachse (61) schräg sind und wobei der Schrägungswinkel (Alpha) der Schlitze (18) kleiner ist als der Spiralwinkel (Beta) der Rillen (70).

9. Verfahren nach Anspruch 8, wobei der Schrägungswinkel (Alpha) der Schlitze (18) um 12,5° kleiner ist als der Spiralwinkel (Beta) der Rillen (70).

10. Verfahren nach Anspruch 8 oder 9, wobei der Spiralwinkel (Beta) der Rillen (70) 27,5° beträgt.

11. Verfahren nach Anspruch 8, 9 oder 10, wobei die vorderen Schneidflächen (43) der Spitzen (30) nach dem Befestigen der Spitzen (30) an der ringförmigen Wandung (12) geschliffen werden und wobei die zu diesem Zweck verwendete Schleifscheibe relativ wenig bzw. gar kein Material von dem Cutter-Körper abschleift.

12. Verfahren nach einem der Ansprüche 6 bis 11, bei dem Rinnen (72) in der Endfläche (16) der zylindrischen Wandung (12) gebildet werden, nachdem die Spitzen (30) durch Hartlöten oder ein ähnliches Verfahren befestigt wurden.

## Revendications

1. Procédé de fabrication d'un alésoir à fraise annulaire où des pointes (30) sont placées dans des fentes (18) dans une paroi cylindrique (12) d'un corps d'alésoir et y sont fixées par brasage et les pointes (30) sont ensuite meulées pour former les tranchants (78), les pointes (30) étant empêchées par une projection (32) sur celles-ci de se déplacer radialement vers l'intérieur dans les fentes (18) durant le brasage, caractérisé en ce que chaque pointe (30) comporte des faces d'appui radialement extérieure et intérieure (32, 34) qui s'emboîtent respectivement sur les surfaces extérieure et intérieure (53, 54) de la paroi cylindrique (12) afin de positionner exactement les pointes (30) dans les fentes (18) dans une direction radiale durant le brasage et la paroi cylindrique (12) est uniformément chauffée sur sa circonférence pour fixer simultanément toutes les pointes (30) et en ce que les pointes (30) sont formées pour comporter une face (46) qui est orientée de telle manière par rapport aux faces d'appui (32, 34) qu'elle forme la face de dépouille radialement interne offrant une dépouille axiale et circonférentielle sans meulage après le brasage.

2. Procédé selon la revendication 1, où la face d'appui externe (32) se trouve sur la face d'attaque (42) de la pointe (30).

3. Procédé selon la revendication 2, où la face d'appui externe (32) est de forme rectangulaire.

4. Procédé selon l'une quelconque des revendications 1 à 3, où la face d'appui interne (34) se trouve sur la face d'attaque (42) de la pointe (30).

5. Procédé selon la revendication 4, où la face d'appui interne (34) est de forme effilée.

6. Procédé selon l'une quelconque des revendications précédentes où des rainures hélicoïdales (70) sont formées dans la surface externe (52) de la paroi cylindrique (12) avant que les pointes (30) ne soient fixées par brasage ou action similaire.

7. Procédé selon la revendication 6, où les fentes (18) sont en retrait de façon circonférentielle par rapport aux rainures respectives (70) afin de laisser entre elles des portions (53) de la surface externe (52) de la paroi cylindrique (12), sur ces portions (53) venant s'emboîter les faces d'appui externes (32) sur les pointes (30) durant le brasage ou toute action similaire.

8. Procédé selon toute revendication précédente, où des rainures hélicoïdales (70) sont formées dans la surface externe (52) de la paroi cylindrique (12) et les fentes devant recevoir les pointes (18) sont biaisées par rapport à l'axe de rotation (61) et où l'angle (alpha) d'obliquité des fentes (18) est inférieur à l'angle (bêta) en spirale des rainures (70).

9. Procédé selon la revendication 8, où l'angle (alpha) d'obliquité des fentes (18) est inférieur de 12,5° à l'angle (bêta) en spirale des rainures (70).

10. Procédé selon la revendication 8 ou 9, où l'angle (bêta) en spirale des rainures (70) est de 27,5°.

11. Procédé selon la revendication 8, 9 ou 10, où les faces de dépouille avant (43) des pointes (30) sont meulées après la fixation des pointes (30) à la paroi annulaire (12) et la meule utilisée à cet effet ponce relativement peu ou pas de matériau du corps de l'alésoir.

12. Procédé selon l'une quelconque des revendications 6 à 11, où des rigoles (72) sont formées dans la face d'extrémité (16) de la paroi cylindrique (12) après que les pointes soient fixées par brasage ou action similaire.
